# EUROPÄISCHE PATENTSCHRIFT

(11) **EP 1 517 126 B1**
(45) Veröffentlichungstag und Bekanntmachung des Hinweises auf die Patenterteilung: **01.12.2010**
(21) Anmeldenummer: 04104211.0
(22) Anmeldetag: 02.09.2004
(51) Int. Cl.: G01L 5/04

(54) **Messvorrichtung**
Measuring arrangement
Dispositif de mesure

(30) Priorität: 19.09.2003 DE 10343515
(43) Veröffentlichungstag der Anmeldung: 23.03.2005
(73) Patentinhaber: Voith Patent GmbH, 89522 Heidenheim (DE)
(72) Erfinder: Ischdonat, Thomas, 89429, Bachhagel (DE); Pfifferling, Ralf, 89547, Gerstetten (DE); Sollinger, Michael, 70184, Stuttgart (DE); Muench, Rudolf, 89551, Koenigsbronn (DE)
(74) Vertreter: Kunze, Klaus

(56) Entgegenhaltungen:
- EP-A- 0 018 428
- DE-A1- 4 338 819
- GB-A- 875 508
- US-A- 5 138 878

## Beschreibung

Die Erfindung betrifft eine Maschine zur Herstellung und/oder Behandlung einer Materialbahn, insbesondere Papier- oder Kartonbahn, umfassend eine Messvorrichtung mit wenigstens einem Sensor, der gegenüber einer bewegten Bespannung oder Einrichtung, z.B. Walze, positionierbaren Messrahmen vorgesehen ist.

Messvorrichtungen und Messverfahren, bei denen ein jeweiliger Sensor eine orthogonale Ausrichtung zur Bespannung voraussetzt, bringen extreme Anforderungen bezüglich des Ausrichtens der Traverse gegenüber der Bespannung mit sich. Überdies müssen bei einem Einsatz derartiger Messvorrichtungen und Messverfahren hohe Anforderungen an die Toleranz der Linearführung erfüllt werden.

Die Druckschrift DE 43 38 819 A1 offenbart eine Vorrichtung zur Ermittlung der mittels eines Zuggliedes übertragenen Leistung, insbesondere zur Leistungsmessung während des Radfahrens. Dem Zugglied ist mindestens ein durch dieses verspannbares Stützglied zugeordnet, das einen Messwertaufnehmer zur Messung der elastischen Verformung aufweist. Des weiteren wirkt das Zugglied mit einem in Abhängigkeit von dessen Verstellgeschwindigkeit betätigbaren Signalgeber zusammen, der, wie auch der Messwertaufnehmer, an eine Recheneinheit angeschlossen ist, mittels der deren Signale in einen Leistungswert umwandelbar sind.

Die Druckschrift US-A-5,138,878 beschreibt einen Sensor und ein Verfahren zum Bestimmen von Informationen, die Richtungsschwankungen eines physikalischen Kennzeichens eines sich bewegenden Bogens eines Materials betreffen.

Weiterhin offenbart die Druckschrift EP 0 018 428 A1 ein Verfahren und eine Vorrichtung zum kontaktlosen Messen von elastischen Spannungen in ferromagnetischen Körpern - besonders in Blechen.

Die Druckschrift GB 875,508 A zeigt eine Einrichtung zum Anzeigen von Spannungsänderungen in einem Band, eine Kette, einem Seil, einer Materialbahn oder einem flexiblen Mittel.

Und die Druckschrift DE 101 41 549 C1 offenbart ein Verfahren sowie eine Vorrichtung zur Zugkraftmessung an laufenden Materialien wie Garnen, Fäden, Drähten, Kabeln, Seilen, Litzen, Bändern, Stoffbahnen, Blechen oder dergleichen, unter Verwendung eines Kraftaufnehmers mit einem das Material aus seiner Laufrichtung auslenkenden Kraftfühler, wobei für die Auslenkung der Umschlingungswinkel charakteristisch ist, mit dem das Material den Kraftfühler umschlingt. Dabei wird der nicht fest eingestellte Umschlingungswinkel mittels einer Messeinrichtung kontinuierlich erfasst, wobei aus dem veränderlichen Umschlingungswinkel und der gemessene resultierenden Zugkraft die Zugkraft mit Hilfe eines Rechners ermittelt wird.

Der Erfindung liegt die Aufgabe zugrunde, eine verbesserte Maschine der eingangs genannten Art zu schaffen, bei der die zuvor genannten Nachteile beseitigt sind. Dabei sollen insbesondere Ungenauigkeiten der bisherigen Linearführungen, der Bespannungsführung und Traversenausrichtung ausgeschlossen sein bzw. kompensiert werden. Zudem soll an der Bespannung bzw. Einrichtung eine lokale Spannungsmessung möglich sein.

Diese Aufgabe wird erfindungsgemäß dadurch gelöst, dass der Sensor an einem positionierbaren Messrahmen vorgesehen ist, der über wenigstens einen Schwenkhebel gegen die Bespannung bzw. Einrichtung drückbar und über ein kardanisches Gelenk mit diesem Schwenkhebel verbunden ist.

Aufgrund dieser Ausbildung wird eine deutlich höhere Messgenauigkeit erreicht. Zudem lässt sich die Messvorrichtung nunmehr ohne Linearführung, d.h. nur mit Drehgelenken verwirklichen.

Bevorzugt besitzt das kardanische Gelenk zwei zueinander senkrechte Drehachsen. Dabei kann sich eine Drehachse des kardanischen Gelenks insbesondere allgemein quer zur Laufrichtung der Bespannung bzw. Einrichtung und dessen andere Drehachse allgemein in Laufrichtung der Bespannung bzw. Einrichtung erstrecken.

Der Schwenkhebel ist zweckmäßigerweise um eine sich allgemein quer zur Laufrichtung der Bespannung bzw. Einrichtung erstreckende Achse schwenkbar.

Zweckmäßigerweise ist der Schwenkhebel über wenigstens ein Betätigungselement beaufschlagbar, um den Messrahmen gegen die Bespannung bzw. Einrichtung zu drücken. Dazu kann beispielsweise wenigstens ein pneumatisches und/oder wenigstens ein hydraulisches Betätigungselement vorgesehen sein. Zweckmäßigerweise umfasst das Betätigungselement wenigstens eine Zylinder/Kolben-Einheit.

Gemäß einer bevorzugten praktischen Ausführungsform der erfindungsgemäßen Messvorrichtung erstreckt sich der Messrahmen quer zur Laufrichtung der Bespannung bzw. Einrichtung. Dabei kann er sich zumindest im wesentlichen über die gesamte Bespannungsbreite bzw. Breite der Einrichtung erstrecken.

Bevorzugt ist der Sensor relativ zum Messrahmen allgemein in Querrichtung verfahrbar.

In bestimmten Fällen kann es auch von Vorteil sein, wenn der Sensor relativ zum Messrahmen allgemein in Laufrichtung der Bespannung bzw. Einrichtung verfahrbar ist.

An seinen Berührungsstellen mit der Bespannung bzw. Einrichtung weist der Messrahmen vorteilhafterweise jeweils wenigstens eine Gleit- oder Rollfläche auf.

Vorteilhafterweise ist der gegen die Bespannung bzw. Einrichtung gedrückte Messrahmen über die Gleit- bzw. Rollflächen so an der Bespannung bzw. Einrichtung abgestützt, dass die Messebene zumindest im wesentlichen parallel zur Bespannung bzw. Einrichtung liegt.

Bei einer zweckmäßigen praktischen Ausführungsform der erfindungsgemäßen Messvorrichtung weist der Messrahmen an seinen Berührungsstellen mit der Bespannung bzw. Einrichtung jeweils wenigstens eine Laufrolle auf.

Bei einer bevorzugten praktischen Ausführungsform berührt der Sensor bei gegen die Bespannung bzw. Einrichtung gedrücktem Messrahmen die Bespannung bzw. Einrichtung.

Zur Erfassung der Eintauchtiefe, mit der der gegen die Bespannung gedrückte Messrahmen bzw. der diesem zugeordnete Sensor in die Bespannung eintaucht, kann vorteilhafterweise ein Wegaufnehmer oder ein Winkelgeber vorgesehen sein.

Der Schwenkhebel ist vorzugsweise als zweiarmiger Hebel ausgeführt. Dabei ist der Messrahmen zweckmäßigerweise im Bereich des Endes des der Bespannung bzw. Einrichtung zugewandten Hebelarmes vorgesehen, während das Betätigungselement vorzugsweise im Bereich des Endes des anderen Hebelarmes angreift.

Die bewegte Bespannung kann beispielsweise durch ein Gewebeband, insbesondere Sieb, und insbesondere durch einen Filz gebildet sein.

Die Erfindung wird im folgenden anhand eines Ausführungsbeispiels unter Bezugnahme auf die Zeichnung näher erläutert; in dieser zeigen:
- Figur 1: eine schematische Seitenansicht einer Messvorrichtung mit einem über wenigstens einen Schwenkhebel gegen eine Bespannung drückbaren Messrahmen, dem wenigstens ein Sensor zugeordnet ist, und
- Figur 2: eine schematische Seitenansicht der Messvorrichtung gemäß Figur 1 mit abgeschwenktem Messrahmen.

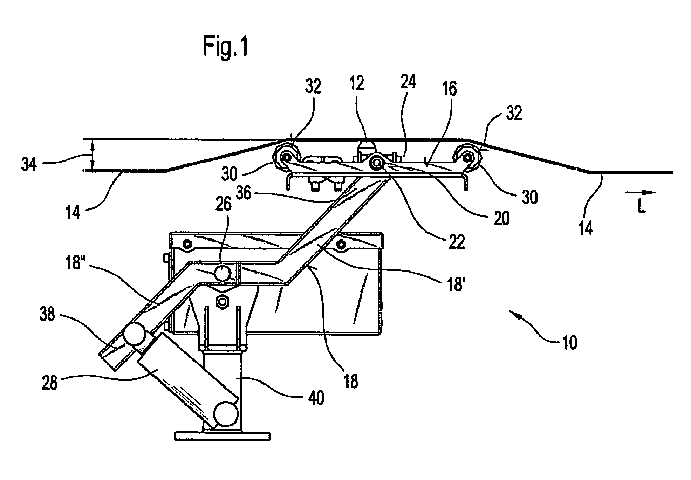

Figur 1 zeigt in schematischer Seitenansicht eine Messvorrichtung 10 mit wenigstens einem Sensor 12.

Der Sensor 12 ist an einem gegenüber einer bewegten Bespannung 14 einer Maschine zur Herstellung und/oder Behandlung einer Materialbahn positionierbaren Messrahmen 16 oder Traverse vorgesehen. Bei der durch die betreffende Maschine herzustellenden bzw. zu behandelnden Materialbahn kann es sich insbesondere um eine Papier- oder Kartonbahn handeln.

Der gegenüber der bewegten Bespannung 14 positionierbare Messrahmen 16 ist über wenigstens einen Schwenkhebel 18 gegen die Bespannung 14 drückbar.

Dabei ist dieser über den Schwenkarm 18 gegenüber der Bespannung 14 positionierbare und gegen diese drückbare Messrahmen 16 über ein kardanisches Gelenk 20 mit dem Schwenkhebel 18 verbunden.

Im vorliegenden Fall umfasst dieses kardanische Gelenk 28 zwei zueinander senkrechte Drehachsen 22, 24. Dabei kann sich eine Drehachse 22 des kardanischen Gelenks 20 insbesondere allgemein quer zur Laufrichtung L der Bespannung 14 und dessen andere Drehachse 24 allgemein in Laufrichtung L der Bespannung 14 erstrecken.

Wie anhand der Figur 1 zu erkennen ist, ist der Schwenkhebel 18 um eine sich allgemein quer zur Laufrichtung L der Bespannung 14 erstreckende Achse 26 schwenkbar. Dazu ist dieser Schwenkhebel 18 über wenigstens ein Betätigungselement 28 beaufschlagbar, um den Messrahmen 16 gegen die Bespannung 14 zu drücken.

Dabei kann beispielsweise wenigstens ein pneumatisches und/oder wenigstens ein hydraulisches Betätigungselement 28 vorgesehen sein. Dieses kann insbesondere wenigstens eine Zylinder/Kolben-Einheit umfassen. Beim vorliegenden Ausführungsbeispiel ist als Betätigungselement 28 beispielsweise ein pneumatischer Zylinder vorgesehen.

Der Messrahmen 16 kann sich insbesondere quer zur Laufrichtung L der Bespannung 14 erstrecken, wobei er sich vorzugsweise zumindest im wesentlichen über die gesamte Bespannungsbreite oder Maschinenbreite erstreckt.

Der Sensor 12 ist relativ zum Messrahmen 16 insbesondere allgemein in Querrichtung verfahrbar. Beim vorliegenden Ausführungsbeispiel ist er relativ zum Messrahmen 16 auch allgemein in Laufrichtung L der Bespannung 14 verfahrbar.

An seinen Berührungsstellen mit der Bespannung 14 weist der Messrahmen 16 jeweils wenigstens eine Gleit- oder Rollfläche 30 auf.

Dabei ist der gegen die Bespannung 14 gedrückte Messrahmen 16 über die Gleit- bzw. Rollflächen 30 so an der Bespannung 14 abgestützt, dass sich die Messebene, wie sie sich insbesondere durch ein entsprechendes Verfahren des Sensors 12 ergibt, zumindest im wesentlichen parallel zur Bespannung 14 liegt.

Beim vorliegenden Ausführungsbeispiel weist der Messrahmen 16 an seinen Berührungsstellen mit der Bespannung 14 jeweils wenigstens eine Laufrolle 32 auf.

Wie anhand der Figur 1 zu erkennen ist, berührt der Sensor 12 bei gegen die Bespannung 14 gedrücktem Messrahmen 16 die Bespannung 14.

Je größer die Kraft ist, mit der das Betätigungselement 28 den Messrahmen, d.h. die Hüllkurve um alle Gleit- bzw. Rollflächen, gegen die Bespannung 14 drückt, bzw. je größer der Luftdruck ist, mit dem das beispielsweise durch einen pneumatischen Zylinder gebildete Betätigungselement 28 beaufschlagt wird, um so tiefer taucht der Messrahmen 16 in die Bespannung 14 ein. Dabei ist die sich ergebende Eintauchtiefe ein Maß für die lokale Spannung der beispielsweise durch ein Gewebeband und insbesondere ein Sieb oder einen Filz gebildeten Bespannung 14. Diese lokale Spannung kann sich über die Bespannungs- bzw. Maschinenbreite verändern.

Zur Erfassung der Eintauchtiefe 34, mit der der gegen die Bespannung 14 gedrückte Messrahmen 16 in die Bespannung 14 eintaucht, kann ein Wegaufnehmer oder ein Winkelgeber vorgesehen sein.

Die Eintauchtiefe 34 ist eine Funktion der bezüglich der Bespannung 14 auftretenden Spannung und der über das Betätigungselement 28 auf den Schwenkhebel 18 ausgeübten Kraft bzw. des Pressluftdrucks im hier beispielsweise durch einen pneumatischen Zylinder gebildeten Betätigungselement 28.

Wie anhand der Figur 1 zu erkennen ist, ist der Schwenkhebel 18 im vorliegenden Fall beispielsweise als zweiarmiger Hebel ausgeführt. Dabei ist der Messrahmen 16 im Bereich des Endes 36 des der Bespannung 14 zugewandten Hebelarmes 18' vorgesehen, während das Betätigungselement 28 vorzugsweise im Bereich des Endes 38 des anderen Hebelarmes 18" angreift.

Wie anhand der Figur 1 zu erkennen ist, ist das Betätigungselement 28 einerseits an einem Stützelement oder Ständer 40 und andererseits im Bereich des Endes 38 des Hebelarmes 18" angelenkt.

In der Darstellung gemäß Figur 1 ist der Schwenkhebel 18 durch das Betätigungselement 28 so beaufschlagt, dass der mit dem Sensor 12 versehene Messrahmen 16 gegen die Bespannung 14 gedrückt wird.

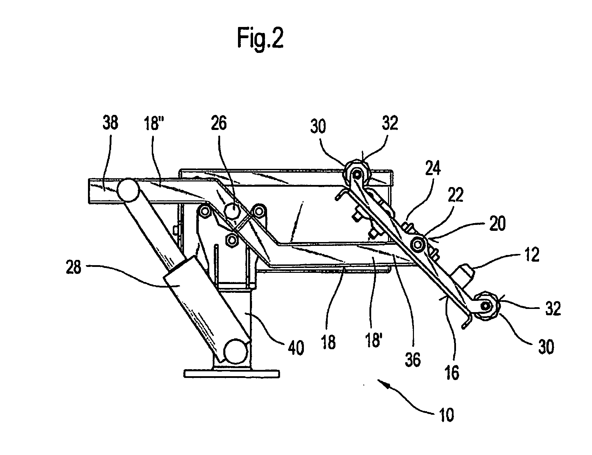

Figur 2 zeigt in schematischer Seitenansicht die Messvorrichtung 10 gemäß Figur 1 mit im Uhrzeigersinn verschwenktem Schwenkhebel 18. Im vorliegenden Fall ist also der mit dem Messrahmen 16 versehene Hebelarm 18' durch eine entsprechende Beaufschlagung des Schwenkhebels 18 über das Betätigungselement 28 nach unten verschwenkt. Der Messrahmen 16 steht im vorliegenden Fall also nicht in Kontakt mit einer Bespannung 14.

In den Figuren 1 und 2 sind einander entsprechenden Teilen gleiche Bezugszeichen zugeordnet.

Anstelle der bewegten Bespannung kann grundsätzlich auch eine bewegte Einrichtung wie z.B. eine Walze oder dergleichen vorgesehen sein.

### Bezugszeichenliste

- 10: Messvorrichtung
- 12: Sensor
- 14: Bespannung, Gewebeband, Filz
- 16: Messrahmen, Traverse
- 18: Schwenkhebel
- 18': Hebelarm
- 18": Hebelarm
- 20: kardanisches Gelenk
- 22: Drehachse
- 24: Drehachse
- 26: Schwenkachse
- 28: Betätigungselement
- 30: Gleit- oder Rollfläche
- 32: Laufrolle
- 34: Eintauchtiefe
- 36: Ende
- 38: Ende
- 40: Stützelement, Ständer

- L: Laufrichtung der Bespannung

## Patentansprüche

1. Maschine zur Herstellung und/oder Behandlung einer Materialbahn, insbesondere Papier- oder Kartonbahn, umfassend eine Messvorrichtung (10) mit wenigstens einem Sensor (12), der an einem gegenüber einer bewegten Bespannung (14) oder Einrichtung, z.B. Walze, positionierbaren Messrahmen (16) vorgesehen ist,
**dadurch gekennzeichnet,**
**dass** der positionierbare Messrahmen (16) über wenigstens einen Schwenkhebel (18) gegen die Bespannung (14) bzw. Einrichtung drückbar und über ein kardanisches Gelenk (20) mit diesem Schwenkhebel (18) verbunden ist.

2. Maschine nach Anspruch 1,
**dadurch gekennzeichnet,**
**dass** das kardanische Gelenk (20) zwei zueinander senkrechte Drehachsen (22, 24) besitzt.

3. Maschine nach Anspruch 2,
**dadurch gekennzeichnet,**
**dass** sich eine Drehachse (22) des kardanischen Gelenks (20) allgemein quer zur Laufrichtung (L) der Bespannung (14) bzw. Einrichtung und dessen andere Drehachse (24) allgemein in Laufrichtung (L) der Bespannung (14) bzw. Einrichtung erstreckt.

4. Maschine nach einem der vorhergehenden Ansprüche,
**dadurch gekennzeichnet,**
**dass** der Schwenkhebel (18) um eine sich allgemein quer zur Laufrichtung (L) der Bespannung (14) bzw. Einrichtung erstreckende Achse (26) schwenkbar ist.

5. Maschine nach einem der vorhergehenden Ansprüche,
**dadurch gekennzeichnet,**
**dass** der Schwenkhebel (18) über wenigstens ein Betätigungselement (28) beaufschlagbar ist, um den Messrahmen (16) gegen die Bespannung (14) bzw. Einrichtung zu drücken.

6. Maschine nach Anspruch 5,
**dadurch gekennzeichnet,**
**dass** wenigstens ein pneumatisches Betätigungselement (28) vorgesehen ist.

7. Maschine nach Anspruch 5 oder 6,
**dadurch gekennzeichnet,**
**dass** wenigstens ein hydraulisches Betätigungselement (28) vorgesehen ist.

8. Maschine nach einem der Ansprüche 5 bis 7,
**dadurch gekennzeichnet,**
**dass** das Betätigungselement (28) wenigstens eine Zylinder/KolbenEinheit umfasst.

9. Maschine nach einem der vorhergehenden Ansprüche,
**dadurch gekennzeichnet,**
**dass** sich der Messrahmen (16) quer zur Laufrichtung (L) der Bespannung (14) bzw. Einrichtung erstreckt.

10. Maschine nach Anspruch 9,
**dadurch gekennzeichnet,**
**dass** sich der Messrahmen (16) zumindest im wesentlichen über die gesamte Bespannungsbreite bzw. Breite der Einrichtung erstreckt.

11. Maschine nach Anspruch 9 oder 10,
**dadurch gekennzeichnet,**
**dass** der Sensor (12) relativ zum Messrahmen (16) allgemein in Querrichtung verfahrbar ist.

12. Maschine nach einem der vorhergehenden Ansprüche,
**dadurch gekennzeichnet,**
**dass** der Sensor (12) relativ zum Messrahmen (16) allgemein in Laufrichtung (L) der Bespannung (14) bzw. Einrichtung verfahrbar ist.

13. Maschine nach einem der vorhergehenden Ansprüche,
**dadurch gekennzeichnet,**
**dass** der Messrahmen (16) an seinen Berührungsstellen mit der Bespannung (14) bzw. Einrichtung jeweils wenigstens eine Gleit- oder Rollfläche (30) aufweist.

14. Maschine nach Anspruch 13,
**dadurch gekennzeichnet,**
**dass** der gegen die Bespannung (14) bzw. Einrichtung gedrückte Messrahmen (16) über die Gleit- bzw. Rollflächen (30) so an der Bespannung (14) bzw. Einrichtung abgestützt ist, dass die Messebene zumindest im wesentlichen parallel zur Bespannung (14) bzw. Einrichtung liegt.

15. Maschine nach einem der vorhergehenden Ansprüche,
**dadurch gekennzeichnet,**
**dass** der Messrahmen (16) an seinen Berührungsstellen mit der Bespannung (14) bzw. Einrichtung jeweils wenigstens eine Laufrolle (32) aufweist.

16. Maschine nach einem der vorhergehenden Ansprüche,
**dadurch gekennzeichnet,**
**dass** der Sensor (12) bei gegen die Bespannung (14) bzw. Einrichtung gedrücktem Messrahmen (16) die Bespannung (14) bzw. Einrichtung berührt.

17. Maschine nach einem der vorhergehenden Ansprüche,
**dadurch gekennzeichnet,**
**dass** zur Erfassung der Eintauchtiefe (34), mit der der gegen die Bespannung (14) bzw. Einrichtung gedrückte Messrahmen (16) in die Bespannung (14) bzw. Einrichtung eintaucht, ein Wegaufnehmer oder ein Winkelgeber vorgesehen ist.

18. Maschine nach einem der vorhergehenden Ansprüche,
**dadurch gekennzeichnet,**
**dass** der Schwenkhebel (18) als zweiarmiger Hebel ausgeführt ist.

19. Maschine nach Anspruch 18,
**dadurch gekennzeichnet,**
**dass** der Messrahmen (16) im Bereich des Endes (36) des der Bespannung (14) zugewandten Hebelarmes (18') vorgesehen ist und das Betätigungselement (28) vorzugsweise im Bereich des Endes (38) des anderen Hebelarmes (18") angreift.

20. Maschine nach einem der vorhergehenden Ansprüche,
**dadurch gekennzeichnet,**
**dass** die bewegte Bespannung (14) durch ein Gewebeband, insbesondere Sieb, gebildet ist

21. Maschine nach einem der vorhergehenden Ansprüche,
**dadurch gekennzeichnet,**
**dass** die bewegte Bespannung (14) durch einen Filz gebildet ist.

## Claims

1. Machine for producing and/or treating a material web, in particular a paper or board web, comprising a measuring apparatus (10) having at least one sensor (12) which is provided on a measuring frame (16) which can be positioned opposite moving clothing (14) or a device, for example a roll, **characterized in that** the measuring frame (16) which can be positioned can be pressed against the clothing (14) or device by at least one pivoting lever (18) and is connected to this pivoting lever (18) by a cardan joint (20).

2. Machine according to Claim 1, **characterized in that** the cardan joint (20) has two axes of rotation (22, 24) perpendicular to each other.

3. Machine according to Claim 2, **characterized in that** one axis of rotation (22) of the cardan joint (20) extends generally transversely with respect to the running direction (L) of the clothing (14) or device, and its other axis of rotation (24) extends generally in the running direction (L) of the clothing (14) or device.

4. Machine according to one of the preceding claims, **characterized in that** the pivoting lever (18) can be pivoted about an axis (26) extending generally transversely with respect to the running direction (L) of the clothing (14) or device.

5. Machine according to one of the preceding claims, **characterized in that** the pivoting lever (18) can be acted on by at least one actuating element (28) in order to press the measuring frame (16) against the clothing (14) or device.

6. Machine according to Claim 5, **characterized in that** at least one pneumatic actuating element (28) is provided.

7. Machine according to Claim 5 or 6, **characterized in that** at least one hydraulic actuating element (28) is provided.

8. Machine according to one of Claims 5 to 7, **characterized in that** the actuating element (28) comprises at least one piston/cylinder unit.

9. Machine according to one of the preceding claims, **characterized in that** the measuring frame (16) extends transversely with respect to the running direction (L) of the clothing (14) or device.

10. Machine according to Claim 9, **characterized in that** the measuring frame (16) extends at least substantially over the entire clothing width or width of the device.

11. Machine according to Claim 9 or 10, **characterized in that** the sensor (12) can be moved generally in the transverse direction relative to the measuring frame (16).

12. Machine according to one of the preceding claims, **characterized in that** the sensor (12) can be moved generally in the running direction (L) of the clothing (14) or device relative to the measuring frame (16).

13. Machine according to one of the preceding claims, **characterized in that**, at its points of contact with the clothing (14) or device, the measuring frame (16) in each case has at least one sliding or rolling surface (30).

14. Machine according to Claim 13, **characterized in that** the measuring frame (16) pressed against the clothing (14) or device is supported on the clothing (14) or device by the sliding or rolling surfaces (30) such that the measuring plane lies at least substantially parallel to the clothing (14) or device.

15. Machine according to one of the preceding claims, **characterized in that**, at its points of contact with the clothing (14) or device, the measuring frame (16) in each case has at least one running roller (32).

16. Machine according to one of the preceding claims, **characterized in that**, when the measuring frame (16) is pressed against the clothing (14) or device, the sensor (12) touches the clothing (14) or device.

17. Machine according to one of the preceding claims, **characterized in that**, in order to register the penetration depth (34) with which the measuring frame (16) pressed against the clothing (14) or device dips into the clothing (14) or device, a displacement transducer or a rotary encoder is provided.

18. Machine according to one of the preceding claims, **characterized in that** the pivoting lever (18) is designed as a two-armed lever.

19. Machine according to Claim 18, **characterized in that** the measuring frame (16) is provided in the region of the end (36) of the lever arm (18') facing the clothing (14), and the actuating element (28) preferably acts in the region of the end (38) of the other lever arm (18").

20. Machine according to one of the preceding claims, **characterized in that** the moving clothing (14) is formed by a woven band, in particular a wire.

21. Machine according to one of the preceding claims, **characterized in that** the moving clothing (14) is formed by a felt.

## Revendications

1. Machine de fabrication et/ou de traitement d'une bande de matériau, notamment d'une bande de papier ou de carton, comprenant un dispositif de mesure (10) avec au moins un capteur (12), qui est prévu sur un cadre de mesure (16) pouvant être positionné par rapport à une toile en mouvement (14) ou un dispositif, comme par exemple un rouleau,
**caractérisée en ce que**
le cadre de mesure positionnable (16) peut être pressé par le biais d'au moins un levier pivotant (18) contre la toile (14) ou le dispositif et est connecté à ce levier pivotant (18) par le biais d'une articulation à cardan (20).

2. Machine selon la revendication 1,
**caractérisée en ce que**
l'articulation à cardan (20) possède deux axes de rotation (22, 24) perpendiculaires l'un à l'autre.

3. Machine selon la revendication 2,
**caractérisée en ce**
**qu'**un axe de rotation (22) de l'articulation à cardan (20) s'étend généralement transversalement à la direction d'avance (L) de la toile (14) ou du dispositif et en ce que son autre axe de rotation (24) s'étend généralement dans la direction d'avance (L) de la toile (14) ou du dispositif.

4. Machine selon l'une quelconque des revendications précédentes, **caractérisée en ce que**
le levier pivotant (18) peut pivoter autour d'un axe (26) s'étendant généralement transversalement à la direction d'avance (L) de la toile (14) ou du dispositif.

5. Machine selon l'une quelconque des revendications précédentes,
**caractérisée en ce que**
le levier pivotant (18) peut être sollicité par le biais d'au moins un élément d'actionnement (28), afin de presser le cadre de mesure (16) contre la toile (14) ou le dispositif.

6. Machine selon la revendication 5,
**caractérisée en ce que**
l'on prévoit au moins un élément d'actionnement pneumatique (28).

7. Machine selon la revendication 5 ou 6,
**caractérisée en ce que**
l'on prévoit au moins un élément d'actionnement hydraulique (28).

8. Machine selon l'une quelconque des revendications 5 à 7,
**caractérisée en ce que**
l'élément d'actionnement (28) comprend au moins une unité cylindre/piston.

9. Machine selon l'une quelconque des revendications précédentes,
**caractérisée en ce que**
le cadre de mesure (16) s'étend transversalement à la direction d'avance (L) de la toile (14) ou du dispositif.

10. Machine selon la revendication 9,
**caractérisée en ce que**
le cadre de mesure (16) s'étendant au moins essentiellement sur toute la largeur de la toile ou la largeur du dispositif.

11. Machine selon la revendication 9 ou 10,
**caractérisée en ce que**
le capteur (12) peut être déplacé généralement dans la direction transversale par rapport au cadre de mesure (16).

12. Machine selon l'une quelconque des revendications précédentes,
**caractérisée en ce que**
le capteur (12) peut être déplacé généralement dans la direction d'avance (L) de la toile (14) ou du dispositif par rapport au cadre de mesure (16).

13. Machine selon l'une quelconque des revendications précédentes,
**caractérisée en ce que**
le cadre de mesure (16) présente, au niveau de ses points de contact avec la toile (14) ou le dispositif, à chaque fois au moins une surface de glissement ou de roulement (30).

14. Machine selon la revendication 13,
**caractérisée en ce que**
le cadre de mesure (16) pressé contre la toile (14) ou le dispositif est supporté par le biais des surfaces de glissement ou de roulement (30) sur la toile (14) ou le dispositif de telle sorte que le plan de mesure soit situé au moins essentiellement parallèlement à la toile (14) ou au dispositif.

15. Machine selon l'une quelconque des revendications précédentes,
**caractérisée en ce que**
le cadre de mesure (16) présente, au niveau de ses points de contact avec la toile (14) ou le dispositif, à chaque fois au moins un galet de roulement (32).

16. Machine selon l'une quelconque des revendications précédentes,
**caractérisée en ce que**
le capteur (12) vient en contact avec la toile (14) ou le dispositif lorsque le cadre de mesure (16) est pressé contre la toile (14) ou le dispositif.

17. Machine selon l'une quelconque des revendications précédentes,
**caractérisée en ce que**
pour détecter la profondeur d'enfoncement (34) sur laquelle le cadre de mesure (16) pressé contre la toile (14) ou le dispositif est enfoncé dans la toile (14) ou le dispositif, on prévoit un capteur de déplacement ou un capteur angulaire.

18. Machine selon l'une quelconque des revendications précédentes,
**caractérisée en ce que**
le levier pivotant (18) est réalisé sous forme de levier à deux bras.

19. Machine selon la revendication 18,
**caractérisée en ce que**
le cadre de mesure (16) est prévu dans la région de l'extrémité (36) du bras de levier (18') tourné vers la toile (14) et l'élément d'actionnement (28) vient en prise de préférence dans la région de l'extrémité (38) de l'autre bras de levier (18").

20. Machine selon l'une quelconque des revendications précédentes,
**caractérisée en ce que**
la toile en mouvement (14) est formée par une bande de tissu, notamment un tamis.

21. Machine selon l'une quelconque des revendications précédentes,
**caractérisée en ce que**
la toile en mouvement (14) est formée par un feutre.
